# EUROPEAN PATENT APPLICATION

(11) **EP 4 421 281 A1**
(43) Date of publication of application: **28.08.2024**
(21) Application number: 23158700.7
(22) Date of filing: 27.02.2023
(51) Int. Cl.: E06B 3/66, E06B 3/663, E06B 3/673, E06B 3/677

(54) **METHOD OF MANUFACTURING A VACUUM INSULATED GLASS UNIT, COMPRISING DROPPING SPACER TOWARDS A GLASS SHEET SURFACE**

(71) Applicant: VKR Holding A/S, 2970 Hørsholm (DK)
(72) Inventor: JOHNSEN, Simon, 2970 Hørsholm (DK); JENSEN, Henrik Aslak, 2970 Hørsholm (DK)
(74) Representative: Høiberg P/S

(57) **Abstract**

The present disclosure relates to a method of manufacturing a vacuum insulated glass unit (200). The method comprises providing a first glass sheet (2) comprising a first major surface 2a, and distributing a plurality of spacers (3) onto the first major surface (2a), wherein the spacers (3) comprises a ferromagnetic material. The distribution of the plurality of spacers (3) comprises dropping spacers (3) from a spacer holder (9, 30) from a distance above the first major surface (2a) and towards an intended spacer position (IP). Each, dropped spacer (3) comprises predefined, oppositely directed contact surfaces (3a, 3b). The spacer (3) has a maximum spacer width (W1)that is at least 1.1 times larger than the maximum spacer height (H1). A magnet arrangement (100) is arranged opposite to the second major surface (2b). The magnet arrangement (100) comprises one or more magnets (10). The magnet arrangement (100) forces the dropped spacer (3) to be orientated with one of said contact surfaces (3a, 3b) facing the first major surface (2a), so that the contact surface (3a, 3b) rests on the first major surface (2a) at the intended spacer position (IP).

## Description

The present disclosure relates to a method of manufacturing a vacuum insulated glass unit.

### Background

Vacuum insulated glass (VIG) units provides various benefits such as enabling improved heat insulation with a reduced amount of materials and/or provides a more space saving solution. Such VIG units may comprise a plurality of spacers arranged in a gap between major surfaces of the glass sheets of the VIG unit. These spacers are distributed in the gap according to a predetermined pattern so as maintain the gap between the glass sheets when the gap is evacuated and sealed.

Some spacer types comprises dots of a solder glass material paste that are provided at the glass surface. Other spacer types comprises spherical balls. Still further spacer types comprises spacers having predefined, oppositely directed contact surfaces intended to abut the respective major glass sheet surface.

Arranging the spacers on the glass sheet surface may require precision, and various solutions for placement of spacers on the glass sheet surface at an intended position exists. Some solutions includes using magnets for maintaining spacers at the glass sheet surface at the desired/intended position, where such magnets are placed opposite to the intended position to maintain the spacers at the intended position.

EP 3 632 871 B1 discloses a solution where a suction pad transports a spacer comprising predefined, oppositely directed contact surfaces to a target position at a surface of a substrate, and the spacer is mounted at the target position at the glass surface and then the spacer is released from the suction pad. An electromagnet is configured to generate a magnetic field during the mounting, and weaken or dissipate the magnetic field at a displacement step. This solution may e.g. suffer from providing a slow pillar placement. Often, more than 1000 or more than 2000 spacers may need to be placed at a glass sheet surface, and the solution disclosed in EP 3 632 871 B1 may result in a slow VIG unit manufacturing and/or may provide a costly solution.

The present disclosure provides a solution for manufacturing a VIG unit, where spacers with predefined, oppositely directed contact surfaces are securely placed at a glass sheet surface with a desired orientation so that a contact surface rests on the first major surface at an intended spacer position. The present disclosure may e.g. enable a faster VIG unit manufacturing and/or may help to provide a more cost efficient manufacturing solution. Additionally or alternatively, the present solution may provide a reliable and fast solution for placing spacers during VIG unit manufacturing.

### Summary

The present disclosure relates to a method of manufacturing a vacuum insulated glass unit. The method comprises:
- providing a first glass sheet comprising a first major surface and a second, oppositely directed major surface,
- distributing a plurality of spacers onto the first major surface, wherein the spacers comprises a ferromagnetic material,
- arranging a second glass sheet so that the distributed spacers are placed in a gap between the first major surface and a major surface the second glass sheet,
- providing an edge seal for sealing the gap, and
- evacuating and sealing the gap.

The distribution of the plurality of spacers comprises dropping spacers from a spacer holder from a distance above the first major surface and towards an intended spacer position. Each dropped spacer comprises predefined, oppositely directed contact surfaces, and the spacer has a maximum spacer width. The maximum spacer width is at least 1.1 times larger than the maximum spacer height. The maximum spacer height extends between the oppositely directed contact surfaces. A magnet arrangement is arranged opposite to the second major surface. The magnet arrangement comprises one or more magnets. The magnet arrangement forces the dropped spacer to be orientated with one of the contact surfaces facing the first major surface, so that the contact surface rests on the first major surface at the intended spacer position.

The present inventors have found that the final resting orientation of the spacer at the intended spacer position/intended position may be important in order to obtain VIG units having the desired properties, and that this may be relevant when using spacers having a maximum spacer width that is larger than the maximum spacer height. Different tests was conducted, and it turned out that when using magnets for placing the spacers, the spacers may sometimes misplace and change orientation to another one than the desired orientation in the resting position, so that the spacer "stood up" on the side surface with the spacer width extending away from the glass sheet surface. The inventors found out that this may be provided at least partly due to the shape and size of the dropped spacer, in combination with the type of magnet used, the magnetic field provided thereby, and also due to the specific orientation of the magnet relative to the intended spacer position. The inventors found out that if the magnet(s) of the magnet arrangement was selected properly and orientated properly, it can be arranged to force the dropped spacer to be orientated with one of the contact surfaces facing the first major surface as desired, so that the contact surface rests on the first major surface at the intended spacer position. This enables that the spacer may be dropped towards the intended spacer position and still be orientated correctly at the intended position. This may help to enable providing a solution that may e.g. provide a faster VIG unit manufacturing and/or may help to provide a more cost efficient manufacturing solution. Additionally or alternatively, it may help to provide a higher yield of glass sheets with spacers arranged correctly at the intended spacer positions.

The intended spacer position is arranged at the first major surface.

In one or more embodiments of the present disclosure, the maximum spacer width may be at least 1.3 times larger than the maximum spacer height. In one or more embodiments of the present disclosure, the spacer may have a maximum spacer width which is at least 1.5 times or at least 1.6 times larger than the maximum spacer height.

In one or more embodiments of the present disclosure, the maximum spacer height of the dropped spacer may be between 0.1 mm and 0.3 mm, such as between 0.15 mm and 0.25 mm, such as between 0.18 mm and 0.22 mm.

Such spacers may e.g. provide an advantageous, space saving VIG unit, and also enable providing a low U-value of the VIG unit.

In one or more embodiments of the present disclosure, the intended spacer position may be located opposite to a location, where said location is arranged between a first north pole and a first south pole. The first south pole is arranged adjacent to the first north pole of the magnet arrangement. The said location may here be arranged opposite to the second major surface.

This may provide a solution where the magnetic field may help to force a spacer to be orientated with a spacer contact surface resting on the first major surface at the intended spacer position.

In one or more embodiments of the present disclosure, the location may be arranged substantially midway between the north pole and a south pole of the magnet arrangement.

In one or more embodiments of the present disclosure, the location may be arranged between the north pole and the south pole of a magnet of the magnet arrangement.

This may e.g. help to provide a solution where the magnetic field may help to force a spacer to be orientated with a spacer contact surface resting on the first major surface at the intended spacer position, in a space saving way. It may for example enable that one magnet may provide magnetic field lines opposite the magnet at the intended positions, that forces the spacer to rest on a contact surface.

In one or more embodiments of the present disclosure, the intended spacer position may be located between an exit point where a magnetic field line provided by the magnet arrangement exits the first glass sheet through the first major surface and an entrance point where the magnetic field line enters into the first glass sheet again through the first major surface.

In one or more embodiments of the present disclosure, the strength of the magnetic field provided by the magnet arrangement may be weaker at the intended spacer position than the strength of the magnetic field at positions at the first major surface that are arranged nearer, such as opposite to, the north pole and south pole terminals that are nearest the intended spacer position, when the spacer is dropped towards the intended spacer position (IP).

For example permanent magnets may be orientated so that the desired direction of the magnetic field at the intended spacer position is provided, but that the magnetic field may hereby be stronger at other locations of the glass sheet surface, and here have a direction that is not desired. It may however still be prevented that the spacer moves away from the intended position to such other locations. This may e.g. be obtained by using a guiding tube, e.g. a guiding tube arranged between a spacer holder and the intended position for guiding the dropped spacer towards the intended position.

In other embodiments, the strength of the magnetic field provided by the magnet arrangement may be stronger at the intended spacer position than the strength of the magnetic field at positions at the first major surface that are arranged nearer, such as opposite to, the north pole and south pole terminals that are nearest the intended spacer position, when the spacer is dropped towards the intended spacer position.

In one or more embodiments of the present disclosure, the direction of the magnetic field extending opposite to the first major surface may be substantially parallel to the first major surface substantially opposite to the intended spacer position.

The inventors have found that this may e.g. provide that the spacer arranges/orientates as intended, on a support surface.

In one or more embodiments of the present disclosure, the spacer may be horizontally arranged, and the majority of magnetic field lines passing through the horizontally arranged spacer at the intended spacer position may be horizontal magnetic field lines. In some embodiments, this may comprise that the direction of the magnetic field passing through the horizontally arranged spacer may be substantially parallel to the first major surface substantially inside the horizontally arranged spacer at the intended position.

It is understood that for a magnet, the direction of the magnetic field is tangent to the field line.

In one or more embodiments of the present disclosure, a magnet body of a magnet of the magnet arrangement may be arranged opposite to the intended spacer position.

The present inventors have found that his solution may provide a space saving solution. It may also provide that the magnets of the magnet arrangement, if more than one magnet is used, may be arranged to have reduced interference between the magnetic fields of the respective magnets.

Additionally or alternatively, providing that the magnet body of the magnet(s) of the magnet arrangement is/are arranged opposite to the intended position(s) may enable providing a reliable solution when arranging the spacers with a mutual distance between adjacent intended positions on the glass sheet surface between 20 mm and 70 mm, such as between 25 mm and 45 mm, such as between 35 mm and 45 mm.

In one or more embodiments of the present disclosure, the intended spacer position may be arranged opposite to the transition between the north part and south part of the magnet body.

The inventors have found that some easily available magnet types, if arranging/orientating the magnet correctly, a magnetic field may be provided opposite to said transition that provides that the spacer is arranged as desired at the intended position.

In one or more embodiments of the present disclosure, the distance between the intended position at the first major surface and the magnet providing the magnetic filed for that intended position may be at least five times lower, such as at least 9 times lower than the distance between that intended position and a neighbouring magnet of the magnet arrangement arranged opposite another intended position for another spacer. The distance between the intended position may e.g. be the distance between the intended position and the proximate part of the transition between the north part and south part of the magnet body.

As the magnetic force reduces significantly when the distance increases, This may provide that less influence on the spacer from a neighbouring magnet is obtained.

In one or more embodiments of the present disclosure, the magnet arrangement may be configured so that a direct line extending between a first magnetic south terminal and a first magnetic north terminal extends with an angle that is less than 45°, such as less than 10°, such as less than 5° to the second major surface. In further embodiments, said direct line may be parallel to the second major surface.

In one or more embodiments of the present disclosure, said direct line may extend through the magnet body, such as extend through the magnet body in substantially the entire extension of the direct line.

In one or more embodiments of the present disclosure, the maximum spacer width of the dropped spacer may be at least 0.3 mm, such as at least 0.4 mm, such as at least 0.5 mm.

In one or more embodiments of the present disclosure, the maximum spacer width of the dropped spacer may be between 0.15 mm and 0.7 mm, such as between 0.3 mm and 0.6 mm, such as between 0.35 mm and 0.55 mm.

In one or more embodiments of the present disclosure, the dropped spacer may comprise a side surface extending between edges of the spacer, such as wherein said edges of the spacer borders the first and second contact surfaces, respectively.

In one or more embodiments of the present disclosure, the side surface of the spacer extends convexly, such as curved, between said edges.

In one or more embodiments of the present disclosure, the dropped spacer may be dropped freely towards the first major surface. In some embodiments of the present disclosure, the dropped spacer may be dropped freely from an outlet and/or a spacer holder and towards the first major surface.

This may e.g. help to enable providing a faster spacer placement.

In one or more embodiments of the present disclosure, the dropped spacer may be dropped freely, by means of gravity, towards the first major surface.

In some embodiments of the present disclosure, the movement of the dropped spacer to may be provided while a new spacer is retrieved and put in place for dropping at a new intended location.

In one or more embodiments of the present disclosure, the dropped spacer may be dropped from a guiding tube outlet and/or spacer holder and towards the intended spacer position. In further embodiments, the guiding tube outlet and/or the spacer holder may be placed with a distance from the intended spacer position that is less than the maximum spacer height.

This may e.g. help to reduce the risk of the spacer moving towards other locations, than the intended position, where a magnetic field is stronger. This may reduce the risk that the distance between neighbouring spacers varies in an unintended way and/or that the spacer is oriented in an unintended way at the glass sheet surface. Hereby the guiding tube controls the position of the spacer while the magnet arrangement controls the orientation of the spacer. This ensures quick and reliable placement.

In one or more embodiments of the present disclosure, the dropped spacer may be dropped from a guiding tube outlet and/or spacer holder and towards the intended spacer position, wherein said guiding tube outlet and/or the spacer holder is placed with a distance from the intended spacer position that is larger than the maximum spacer height.

This may e.g. help to provide a more simple solution since a movement between the guiding tube outlet and/or spacer holder in a direction towards and away from the first major surface is not needed, which may help to speed up manufacturing time and/or provide a more space saving solution.

In one or more embodiments of the present disclosure, the dropped spacer may be dropped from a distance of at least 2 cm, such as at least 7 cm, such as at least 10 cm from the first surface and into a guiding tube.

In one or more embodiments of the present disclosure, a guiding tube, such as a funnel, may be arranged between the spacer holder and the intended spacer position, wherein the spacer holder, at a dropping position, releases the spacer into the guiding tube.

In one or more embodiments of the present disclosure, a controller controls the spacer holder so as to move, such as reciprocate and/or rotate, the spacer holder between a spacer collection position where a spacer is individually collected from a storage and a dropping position.

This may enable an advantageous, such as a faster, manufacturing.

In one or more embodiments of the present disclosure, the spacer holder comprises a suction inlet for collecting and/or retaining the collected spacer.

In one or more embodiments of the present disclosure, the spacer holder comprises a needle having an interior flow path and wherein the suction inlet to the interior flow path is arranged at a distal collection end of the needle, wherein a suction arrangement provides a gas flow in the interior flow path of the needle so that the spacer is collected at the distal collection end.

In one or more embodiments of the present disclosure, a monitoring system provides a monitoring of the flow in the flow path so as to determine if a spacer has been collected. This may e.g. help to provide a more reliable VIG unit manufacturing.

In one or more embodiments of the present disclosure, a plurality of spacers are stored in a spacer storage with a random orientation, and wherein the spacers are individually collected, one by one, from the spacer storage.

This may provide a faster and/or more mechanically simple manufacturing solution.

In one or more embodiments of the present disclosure, the magnet arrangement comprises one or more permanent magnets.

The inventors have found that suitable permanent magnets are available that may provide the desired magnetic properties. Permanent magnets may e.g. be easy to implement, be cost efficient, require a less complex control and/or enable faster VIG unit manufacturing.

In one or more embodiments of the present disclosure, the magnet arrangement comprises one or more electro magnets.

In one or more embodiments of the present disclosure, the magnet arrangement comprises one or more rod magnet(s), horse shoe magnet(s), ball magnet(s) and/or disc magnet(s).

In one or more embodiments of the present disclosure, the north pole terminal surface and the south pole terminal surface of the respective magnet of the magnet arrangement extends in a direction different from parallel to the second major surface.

In one or more embodiments of the present disclosure, the north pole terminal surface and the south pole terminal surface of the respective magnet of the magnet arrangement may be arranged to face away from a plane extending through said intended spacer position. Said plane may extend perpendicular to the first major surface.

In one or more embodiments of the present disclosure, the north pole terminal surface and the south pole terminal surface of the respective magnet of the magnet arrangement may be arranged to be substantially parallel with a plane extending through said intended spacer position, wherein the plane extends substantially perpendicular to the first major surface.

In one or more embodiments of the present disclosure, a relative movement between the magnet arrangement and the glass sheet is provided after the spacer has been arranged to rest at the intended spacer position, wherein said relative movement is provided in a direction away from the second major surface of the glass sheet so as to increase a distance between the intended spacer position and one or more magnets of the magnet arrangement. This may e.g. help to reduce the risk of the spacers moving from the intended position when removing the glass sheet. In one or more embodiments of the present disclosure, the relative movement may be a movement that is perpendicular to the second major surface.

In one or more embodiments of the present disclosure, the spacer holder may comprise a spacer dispenser comprising a housing, a spacer storage and a movable part configured to individually collect and/or individually dispense the spacer from the spacer storage and through an outlet of the dispenser.

In some embodiments of the spacer dispenser, the spacer storage may be attached to, or integrated in, the dispenser housing, such as in a top part of the housing.

In one or more embodiments of the present disclosure, the dispenser, such as the movable part, may comprise a collection sheet which individually collects a spacer from the spacer storage of the dispenser.

In one or more embodiments of the present disclosure, the magnet arrangement comprises a plurality of magnets. This may e.g. allow faster spacer placement.

In one or more embodiments of the present disclosure, the plurality of magnets may orientate different spacers at different intended positions.

In one or more embodiments of the present disclosure, the position-to-magnet distance between the intended position at the first major surface and the magnet providing the magnetic filed for that intended position may be at least five times lower, such as at least nine times lower, than the position-to-magnet distance between that intended position and a neighbouring magnet of the magnet arrangement arranged opposite another neighbouring intended position (IP) for another spacer. This may e.g. reduce unwanted interference/disturbance of magnetic fields from other magnets of the magnet arrangement at the respective intended position.

Said position-to-magnet distances may in some embodiments be the position-to-magnet distance between the intended position and the proximate part of the transition between the north part and south part of the respective magnet body.

Said position-to-magnet distances may in some embodiments be the smallest position-to-magnet distance between the intended position and a magnet arranged opposite to the intended position, and a position-to-magnet distance between the intended position and the proximate part of the nearest neighbouring magnet of the magnet arrangement.

In one or more embodiments of the present disclosure, the distance between adjacent intended positions is between 20 mm and 70 mm, such as between 25 mm and 60 mm, such as between 25 mm and 45 mm. This may provide a VIG unit with improved insulation properties. In some embodiments the glass sheets may be tempered such as thermally tempered. In these embodiments, the distance between adjacent intended positions may be between 25 mm and 45 mm, such as between 30 mm and 45 mm (both end points included).

In some embodiments of the present disclosure, the glass sheets of the VIG unit may be tempered, such as thermally tempered. In these embodiments, the distance DIS4 between adjacent intended positions IP may in further embodiments be between 25 mm and 45 mm, such as between 30 mm and 45 mm (both end points included).

In some embodiments of the present disclosure, the length of the magnet body may be larger than the maximum spacer width. This may help to provide a desired placement and/or orientation of the spacer at the intended position.

In some embodiments of the present disclosure, the length of the magnet body may be at least 10 times, such as at least 15 times, or at least 20 times, larger than the maximum spacer width.

The present disclosure moreover relates to a spacer placement system comprising at least one spacer holder and a magnet arrangement, wherein the spacer placement system is configured to provide the placement of a spacer at an intended position according to any of the preceding embodiments.

Generally, in some embodiments of the present disclosure, the system and/or method as described according to various embodiments above may be designed so that 400 spacers are placed at intended positions at a glass sheet surface within no more than 40 seconds, such as no more than 30 seconds, e.g. no more than 20 seconds. In one or more embodiments the method and/or system is able to correctly place and orient more than 10 spacers / second such as 20 spacers / second.

### Figures

Aspects of the present disclosure will be described in the following with reference to the figures in which:
- fig. 1: : illustrates dropping of a spacer according to embodiments of the present disclosure,
- fig. 2: : illustrates a spacer resting on a surface according to embodiments of the present disclosure,
- figs. 3A-3B: : illustrates a spacer according to embodiments of the present disclosure,
- figs. 4A-4B: : illustrates magnetic field lines of a magnet arranged according to embodiments of the present disclosure,
- fig. 5: : illustrates an embodiment of the present disclosure where an array of magnets are arranged opposite to individual intended spacer positions according to embodiments of the present disclosure,
- fig. 6: : illustrates an embodiment of the present disclosure, where intended spacer positions are arranged opposite to a position arranged between north and south of two adjacent magnets, according to embodiments of the present disclosure,
- fig. 7: : illustrates a spacer placement system where a spacer holder moves between a space storage and a dropping position, according to embodiments of the present disclosure,
- figs. 8-9: : illustrates a spacer according to further, various embodiments of the present disclosure,
- figs. 10-13: : illustrates a spacer placement system comprising a magnet according to various embodiments of the present disclosure,
- fig. 14: : illustrates a spacer placement system comprising an outlet being arranged with a distance from the major surface of a glass sheet, according to embodiments of the present disclosure,
- figs. 15A -15B: : illustrates a spacer dispenser according to embodiments of the present disclosure,
- fig. 16: : illustrates a spacer placement system comprising a dispenser arranged opposite to an intended spacer position, according to embodiments of the present disclosure,
- figs. 17a-17b: : illustrates a relative movement between a magnet arrangement and a glass sheet, according to embodiments of the present disclosure,
- fig. 18: : illustrates a VIG unit according to embodiments of the present disclosure,
- fig. 19: : illustrates a manufacturing line for manufacturing VIG units, according to embodiments of the present disclosure, and
- fig. 20: : illustrates a glass sheet comprising a plurality of spacers arranged at a major surface of the glass sheet at intended spacer positions according to a predefined pattern/template, according to embodiments of the present disclosure.

### Detailed description

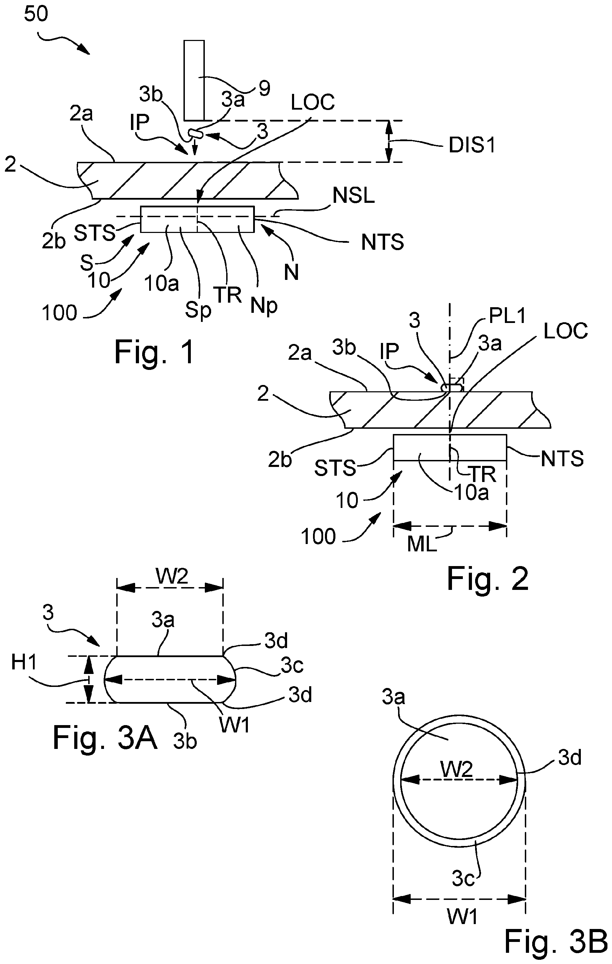

Fig. 1 illustrates schematically a spacer placement system 50 according to embodiments of the present disclosure. The spacer placement system 50 is configured to place spacers 3 on a major glass sheet 2 surface 2a according to embodiments of the present disclosure, during manufacturing of vacuum insulated glass (VIG) units.

The glass sheet 2 may in embodiments of the present disclosure have a thickness (extending between major surfaces 2a, 2b) between 1 mm to 6 mm, such as between 2 mm to 5 mm, such as between 2.8 mm to 4.2 mm (both end points included). The glass sheet 2 may in embodiments of the present disclosure have a thickness of 4 or 3 mm.

The glass sheet 2 may be an annealed glass sheet or a tempered glass sheet, such as a thermally tempered glass sheet. Tempered glass sheets are more strong than annealed glass sheets (relative to the glass sheet thickness), and this may enable providing a larger spacer distance than if using annealed glass sheets.

Initially, a first glass sheet 2 comprising a first major surface 2a and a second, oppositely directed, major surface 2b is provided.

The spacer placement system 50 places/distributes a plurality of spacers 3 onto the first major surface 2a. The spacers 3 comprises a ferromagnetic material.

The distribution of the plurality of spacers 3 comprises dropping spacers 3, such as e.g. spacers 2 described further below, from a spacer holder 9 from a distance DIS 1 above the first major surface 2a and towards an intended spacer position IP. The dropped spacer 3 comprises oppositely directed, predefined/pre-shaped contact surfaces (see e.g. also fig. 3).

A magnet arrangement 100 is arranged opposite to the second major surface 2b. The magnet arrangement (100) comprises one or more magnets 10.

In fig. 1, the magnet 10 is a rod magnet, but it may also, in other embodiments of the present disclosure, comprise a horseshoe magnet, a ball magnet, a disc magnet and/or the like, as e.g. described in more details further below.

The magnet arrangement 100 may in embodiments of the present disclosure comprise one or more permanent magnets 10, but in other embodiments of the present disclosure, the magnet arrangement 100 may comprise one or more electro magnets (not illustrated).

The magnet arrangement 100 is arranged so as to force the dropped spacer 3 to be orientated with one of the contact surfaces 3a, 3b of the spacer facing the first major surface 2a, so that the contact surface 3a, 3b rests on the first major surface 2a at the intended/desired spacer position IP.

The intended spacer position IP may also be called intended position IP in the present disclosure.

In fig. 1, the magnet arrangement comprises a single magnet 10, but it is understood, as also described in more details below, that the magnet arrangement 100 in embodiments of the present disclosure may comprise a plurality of magnets 10.

The magnet 10 comprises a magnet body 10a comprising a north pole N and a south pole S. The dashed line TR illustrates the transition between the north pole part/north part Np and the south pole part/south part Sp of the magnet body 10a.

In the example illustrated in fig. 1, the magnet body 10a may be arranged opposite to the intended position IP.

As illustrated in fig. 1, the intended position IP may be arranged substantially opposite to the transition TR between the north part Np and south part Sp of the magnet body 10a.

The intended position IP is in fig. 1 located opposite to a location LOC. This location LOC is arranged between a first north pole N and a first south pole S arranged adjacent to the first north pole N of the magnet arrangement. The location LOC is arranged opposite to the second major surface 2c.

In some embodiments, the LOC may be arranged substantially midway between the north pole N and a south pole S of the magnet arrangement 100.

In some embodiments, the position (IP)-to-magnet (10) distance between the intended position IP at the first major surface 2a and the magnet 10 providing the magnetic filed for that intended position IP may be at least five times lower, such as at least 9 times lower than the position-to-magnet distance between that intended position IP and a neighbouring magnet of the magnet arrangement arranged opposite another neighbouring intended position for another spacer. The position-to-magnet distance may e.g. be the distance between the intended position IP and the proximate part of the transition TR between the north part NP and south part SP of the magnet body 10a of the respective magnet. In some embodiments of the present disclosure, the shortest distance between the intended position IP and the proximate magnet 10 providing the magnetic field for the intended position may substantially correspond to the glass sheet 2 thickness. In some embodiments, this shortest distance may have a magnitude which is between the glass sheet 2 thickness and the glass sheet 2 thickness + 5 mm, such as between the glass sheet 2 thickness and the glass sheet thickness + 2 mm while dropping the spacer 3. This shortest distance may be perpendicular to the glass sheet surface 2a and 2b.

The magnet arrangement 100 may be configured so that a direct line NSL extending between a magnetic south S terminal STS and a neighbouring magnetic north N terminal NTS extends with an angle that is less than 45°, such as less than 10°, such as less than 5° to the second major surface 2b. In fig. 1, the direct line NSL is substantially parallel to the second major surface 2b. The direct line NSL may extend through centre/middle portions of the magnetic south S terminal STS and the neighbouring magnetic north N terminal NTS, respectively. In fig. 1, the line NSL extends through the magnet body 10a between the terminals STS, NTS

Fig. 2 illustrates schematically the spacer 3 after it has fallen to rest on the major glass sheet surface 2a. The spacer 3 hence rests with a contact surface 3b on the surface 2a.

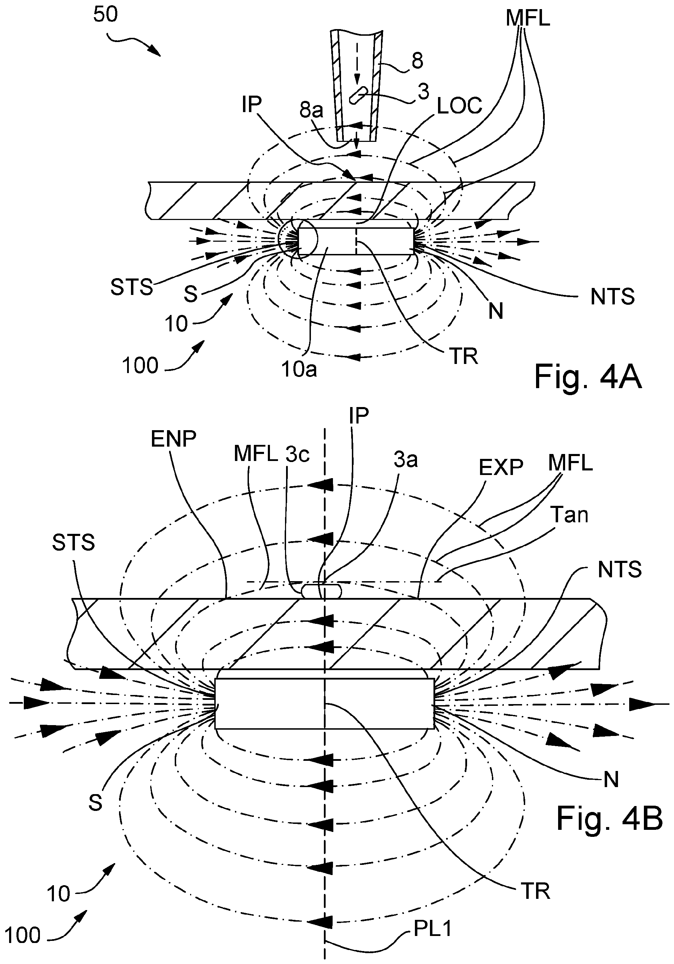

Fig. 2 moreover illustrate an embodiment of the present disclosure wherein the north pole N terminal surface NTS and the south pole S terminal surface STS of the respective magnet 10 of the magnet arrangement 100 are arranged to face away from a plane PL1 extending through the intended position IP, where the plane PL1 extends perpendicular to the first major surface 2a. Fig. 4, which is described further below, illustrates an example of magnetic field lines that may originate from a magnet 10 arranged as illustrated.

It is generally understood that the length ML of the magnet 10 body 10a, in embodiments of the present disclosure, may be larger than the maximum spacer 3 width W1 (see fig. 3A and 3B). This length ML may extend between the north and south pole terminals STS, NTS. In some embodiments, this magnet length ML may be at least five times, such as at least 10 times, such as at least 15 times or at least 20, larger than the maximum spacer width W1.

As can be seen also from fig. 2, the magnet body 10 may comprise oppositely directed terminals STS, NTS.

In one or more embodiments of the present disclosure, the dropped spacer 3 is dropped freely towards the first major surface 2a. In some embodiments of the present disclosure, the dropped spacer 3 may be dropped freely from an outlet and/or a spacer 3 holder 9 and towards the first major surface 2a.

Figs. 3A and 3B illustrates a spacer 3 according to embodiments of the present disclosure, which is to be placed onto the major surface 2a at the intended position. Each, dropped spacer 3 comprises predefined, oppositely directed contact surfaces 3a, 3b.

The spacer 3 has a maximum spacer width W1, which is at least 1.1 times larger than the maximum height H1 of the spacer 3.

In some embodiments, of the present disclosure, the spacer 3 may have maximum spacer width W1, which is at least 1.3 times larger than the maximum height H1 of the spacer.

In some embodiments, the spacer 3 may have a maximum spacer width W1 which is at least 1.5 times or at least 1.6 times larger than the maximum height H1 of the spacer 3.

In some embodiments of the present disclosure, the maximum spacer width W1 may be between 1.1 and 6 times larger, such as between 1.3 and 5 times larger, such as between 5 and 4 times larger than the maximum height H1 of the spacer 3.

In some embodiments of the present disclosure, the maximum spacer width W1 may be at least 1.8 times larger, such as at least 2 times larger, for example at least 2.5 times larger, than the maximum height H1 of the spacer 3.

As can be seen from fig. 3, the maximum spacer height H1 extends between the oppositely directed contact surfaces 3a, 3b. The spacer 3 is different from spherical, but in some embodiments, the spacer may be disc shaped or the like and may be obtained by means of deforming a solid spherical ball prior to dropping the spacer 3 towards the surface 2a.

In some embodiments of the present disclosure, the maximum contact surface 3a, 3b width W2 may be at least 0.9 times the maximum height H1 of the spacer 3, such as at least 1.1 times the maximum height H1 of the spacer 3, such as at least 1.3 times the maximum height H1 of the spacer 3.

In some embodiments of the present disclosure, the maximum contact surface 3a, 3b width W2 may be smaller than the maximum spacer width W1.

In some embodiments of the present disclosure, the maximum contact surface 3a, 3b width W2 may be at least 1.5 times larger, such as at least 2 times larger, such as at least 2.5 times larger, than the maximum height H1 of the spacer 3.

The spacer 3 is elongated in the direction of the maximum width W1, when seen in cross section.

The dropped spacer 3 comprises the first contact surface 3a, the second oppositely directed contact surface 3b, and a side surface 3c extending between edges 3d of the spacer 3. The edges 3d borders the first 3a and second 3b contact surfaces. In fig. 1, the side surface 3c extends convexly, such as curved, between the edges 3d.

Fig. 3B illustrates the spacer if fig 3A, seen towards the contact surface 3a. Therefore, the contact surface 3b is not visible in fig. 3B. The surface area of the contact surface 3a may in some embodiments of the present disclosure substantially be of the same size as the contact surface area of contact surface 3b. These may e.g. vary less than ±5%, such as less than ±3%. The surface area of the respective contact surface 3a may be defined within the area defined by the edge 3d, so that the edge 3d acts as contact surface boundary. The spacer illustrated in fig 3A and 3B is substantially disc shaped, and the maximum width W1 may as illustrated be provided substantially midway on the side surface 3c between the edges 3d bordering the respective contact surface 3a, 3b.

The spacer 3 may e.g. in embodiments of the present disclosure, have been obtained by coining a solid ball such as a solid metal ball so as to obtain the contact surfaces 3a, 3b. This will reduce the ball height to provide the height H1, and enlarge the width of the ball thereby providing the spacer width W1. In some embodiments, the coining process may provide that the side surface 3c extends convexly, such as curved, between the edges 3d.

The spacers 3 used may in embodiments have an accepted maximum spacer width W1 variation (tolerance) of less than ±10%. such as less than ±6%. such as less than ±4% from a target maximum width W1.

The spacers 3 used may in embodiments have an accepted maximum contact surface width W2 variation (tolerance) of less than ±10%. such as less than ±6%. such as less than ±4% from a target maximum contact surface 3a, 3b width W2.

The spacers 3 used may in embodiments have a maximum height H1 variation (tolerance) of less than ±8%. Such as less than ±6%. such as less than ±4%.

In embodiments of the present disclosure, the maximum spacer height H1 of the dropped spacer 3 may be below 0.3 mm, such as below 0.25 mm, such as below 0.22 mm or below 0.18 mm. In some embodiments of the present disclosure, the maximum spacer height H1 of the dropped spacer 3 may be at least 0.9 mm, such as at least 0.15 mm such as at least 0.18 mm. In some embodiments of the present disclosure, the maximum spacer height H1 of the dropped spacer 3 may be between 0.1 mm and 0.3 mm, such as between 0.15 mm and 0.25 mm, such as between 0.18 mm and 0.22 mm. This may be the case for substantially all spacers 3 arranged at the surface 2a.

In some embodiments of the present disclosure, the maximum spacer width W1 of the dropped spacer may be at least 0.3 mm, such as at least 0.4 mm, such as at least 0.5 mm. In some embodiments of the present disclosure, the maximum spacer width W1 of the dropped spacer may be between 0.15 mm and 0.7 mm, such as between 0.3 mm and 0.6 mm, such as between 0.35 mm and 0.55 mm.

In some embodiments of the present disclosure, the maximum spacer width W1 may be larger than the maximum contact surface 3a, 3b width W2.

For a magnet, the direction of the magnetic field is tangent to the field line.

In figs. 4A and 4B, the magnet arrangement is arranged so that the direction of the magnetic field extending opposite to the first major surface 2a, and provided by the magnet arrangement 100, is substantially parallel to the first major surface 2a substantially opposite to the intended position IP.

The intended position IP may be an intended area arranged substantially opposite to the "top point" of a plurality of magnetic field lines placed opposite to the surface 2a. This will provide that the spacer 3 arranges in a resting position at the glass sheet surface 2a as intended, at the intended position, and the inventors have seen by test that the spacer 3 may not tend to move closer to an undesired exit point EXP where a magnetic field lines MFL 1 provided by the magnet arrangement 100 exits the first glass sheet 2 through the first major surface 2a, or closer towards an entrance point ENP where the imaginary magnetic field line MFL enters into the first glass sheet 2 again through the first major surface 2a. Hence, the spacer 3 stays at the intended position IP with the desired orientation - i.e. lying on the contact surface with the spacer width W1 direction substantially parallel to the glass sheet surface 2a.

In some embodiments of the present disclosure, as illustrated e.g. in figs 4A and 4B, the intended position IP is located between an exit point EXP where a magnetic field line MFL1 provided by the magnet arrangement 100 exits the first glass sheet 2 through the first major surface 2a and an entrance point ENP where the imaginary, magnetic field line MFL enters into the first glass sheet 2 again through the first major surface 2a.

The spacer 3 may in embodiments of the present disclosure be substantially solid, such as monolithic. The spacer 3 may be a metal spacer such as a steel spacer. The spacer 3 comprises a ferromagnetic material. In embodiments of the present disclosure, the spacer 3 may comprise a ferromagnetic material substantially uniformly blended/mixed into the spacer 3 body material, or the entire material of the spacer 3 may be made from or consist of a ferromagnetic material. Additionally or alternatively, the ferromagnetic material may be placed as a magnetic layer/coating such as a laminated layer, at the outside surface(s) 3a, 3b and/or 3c of the spacer body and/or, as a ferromagnetic layer inside the spacer 3 body. The ferromagnetic material is configured so that the magnet arrangement 100 is able to arrange the spacer with the desired orientation when resting at the intended position IP. Additionally, the magnet may in embodiments be configured to maintain the spacer 3 at the intended position IP due to the provided magnetic field.

Fig. 4A and 4B illustrate schematically a spacer placement system 50 according to further embodiments of the present disclosure. In fig. 4A the spacer is dropped towards the surface 2a, and at fig. 4B, the spacer is resting at the surface 2a. The magnetic field lines MFL (dash-dotted lines) indicating the magnetic field that is provided by the magnet body 10a of the magnet 10 of the magnet arrangement 100 are illustrated in figs. 4A and 4B.. As can be seen, the majority of the magnetic field lines MFL leaves the magnetic north N terminal NTS, moves around the body 10a and enters the magnetic body through the magnetic south S terminal STS. The magnetic field MFL enters through the glass sheet 2, out of the major glass sheet surface 2a and acts on the dropped spacer 3. The Magnetic field is hence strongest at and opposite to the magnetic terminal NTS, STS, which is also illustrated by the reduced distance between adjacent magnetic field lines near the north terminal NTS and south terminal STS, respectively.

The inventors have realized that it is possible to assure reliability in that the spacer 3, when dropped towards the glass sheet 2 surface 2a, will support on an intended contact surface 3a, 3b of the spacer 3 if dropping the spacer 3 towards the intended position IP. If selecting one or more magnets 10 and arranging and orienting the magnet 10 or magnets 10 of the magnet arrangement 100 properly relative to the intended position IP, then, when and dropping the spacer 3 towards the intended position, the magnetic field will induce the spacer 3 to be orientated with one of the contact surfaces 3a, 3b resting on the glass sheet surface 2a. This may require that the magnetic field lines MFL does not extend substantially perpendicular to the glass sheet surface at the intended position IP, as this may induce the spacer 3 to stand up on the side surface 3c instead, which is not desired.

However, in figs. 1-2 and 4A-4B, the magnet 10 body 10a, such as a rod magnet, is arranged so that the magnetic south S terminal STS and magnetic north N terminal NTS, respectively, extends in (for example) opposite directions and faces away from the plane PL1 extending through the intended position IP. The plane PL1 extends perpendicular to the first major surface 2a. This provides that the magnetic field forces the dropped spacer 3 to be orientated with one of the contact surfaces 3a, 3b facing the first major surface 2a so that the contact surface 3a, 3b rests on the first major surface 2a at the intended spacer position IP.

As can be seen in e.g. fig. 4B, the plane may extend through a plurality of magnetic field lines MFL substantially at the location where the tangent Tan to the field lines MFL are parallel to the major glass sheet surface 2a.

In one or more embodiments of the present disclosure, the spacer 3 may be horizontally arranged. Hence, the spacer width W1, which is larger than the spacer height H1, extends substantially parallel to the glass sheet surface 2a. The majority of magnetic field lines MFL passing through the horizontally arranged spacer 3 at the intended spacer position IP may be "horizontal" magnetic field lines. In some embodiments, this may comprise that the direction of the magnetic field passing through the horizontally arranged spacer 3 may be substantially parallel to the major glass sheet surface 2a inside the horizontally arranged spacer 3 at the intended position IP.

In some embodiments of the present disclosure, the strength of the magnetic field provided by the magnet arrangement 100 may be weaker at the intended position IP than the strength of the magnetic field at positions/areas at the first major surface 2a that are arranged closer to, such as opposite to, the north pole N terminal NTS and south pole S terminal STS that are nearest the intended position IP. This may e.g. depend on the type of magnet(s) 10, orientation of the magnet(s) 10, the thickness of the glass sheet 4, distance between the respective magnet 10 and the intended position IP and/or the like.

The north pole N terminal surface NTS and the south pole S terminal surface STS of the respective magnet 10 of the magnet arrangement 100 may in embodiments of the present disclosure extend in a direction different from parallel to the second major surface 2b. This may for example help to provide a reduction of the risk that the dropped spacer 3 does not move away from the intended position IP to a position closer to one of the poles N, S, where the spacer may arrange itself with an undesired orientation due to the direction of the magnetic field at that location.

For example, in figs. 4A and 4B, the north pole N terminal surface NTS and the south pole S terminal surface STS of the respective magnet 10 of the magnet arrangement 100 extend substantially perpendicular to the second major surface 2b.

The north pole N terminal surface NTS and the south pole S terminal surface STS of the respective magnet 10 of the magnet arrangement 100 are in the figs 1, 2 and 4A, 4B arranged to face away from the plane PL1 extending through the intended position IP, where the plane PL1 extends perpendicular to the first major surface 2a. This may reduce the risk that the dropped spacer 3 does not move away from the intended position IP to a position closer to one of the poles N, S, where the spacer may arrange itself with an undesired orientation due to the direction of the magnetic field at that location, as the part of the magnet NTS, STS with strong magnetic field face away from the plane PL.

In the figures 1, 2 4A and 4B, the north pole N terminal surface NTS and the south pole S terminal surface STS of the respective magnet 10 of the magnet arrangement 100 are arranged to be substantially parallel with the plane PL1 extending through the intended position IP.

In further embodiments, the plane PL1 may extend substantially perpendicular to the first major surface 2a.

The north pole N terminal surface NTS and the south pole S terminal surface STS of the respective magnet 10 of the magnet arrangement 100 may in embodiments of the present disclosure be arranged to be substantially parallel with the plane PL1 extending through the intended position IP. In other embodiments of the present disclosure, the north pole N terminal surface NTS and the south pole S terminal surface STS of the respective magnet 10 of the magnet arrangement 100 may extend within ±35°, such as within ±10° such as within ±5° to the plane PL1.

As can be seen from the field lines MFL in figs. 4A and 4B, the strength of the magnetic field at the intended position IP may in embodiments of the present disclosure be lower than the strength of the magnetic field close to or at the north pole N terminal NTS and south pole S terminal STS.

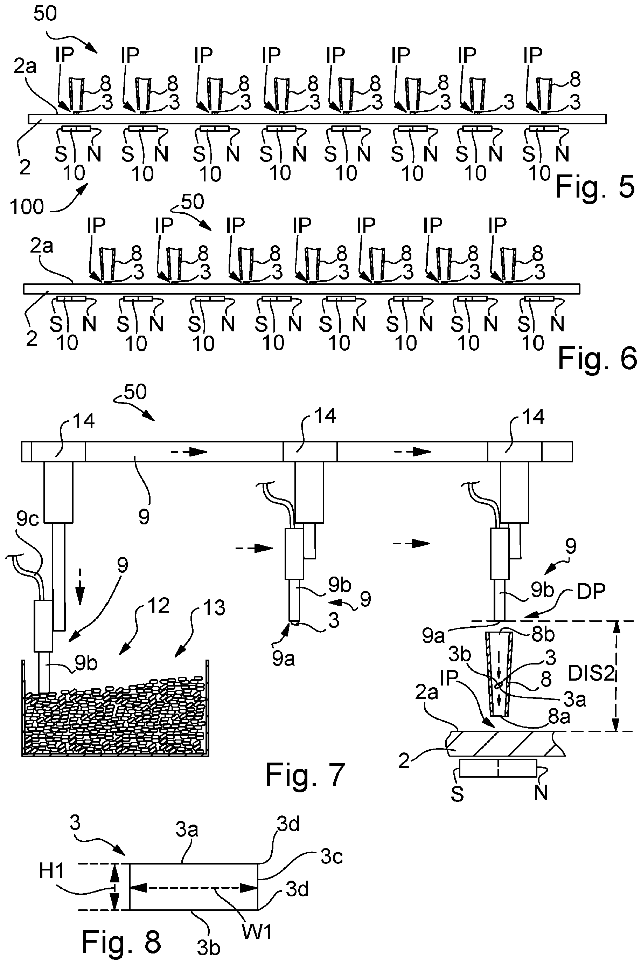

Fig. 5 illustrates schematically an embodiment of the present disclosure, wherein the magnet arrangement 100 comprises an array of magnets comprising a plurality of magnets 10. Each magnet's 10 body is placed opposite to an intended spacer position IP (as e.g. explained above), and the spacer is dropped, in this case through a guiding tube 8, and towards the intended position IP.

The magnetic field of the respective magnet 10 of the magnet arrangement 100 forces the dropped spacer 3 to be orientated with one of its contact surfaces 3a, 3b facing the first major surface 2a, so that the contact surface 3a, 3b rests on the first major surface 2a at the intended spacer position IP placed opposite the respective magnet 10.

Fig. 6 illustrates schematically a further embodiment of the present disclosure, wherein the magnet arrangement 100 comprises a plurality of magnets 10. Here, the magnets of the magnet array are arranged so that the intended position is placed opposite to a location placed between a north pole N terminal and a south pole S terminal of two different, neighbouring magnets 10. The magnetic fields of the neighbouring magnets 10 may influence on each other to create a magnetic field having a tangent Tan to the field lines MFL that is parallel to the major glass sheet surface 2a at the intended position IP. In fig. 6, the magnetic field of the respective magnet 10 of the magnet arrangement 100 extending between a north N and south S pole of the neighbouring magnets will forces the dropped spacer 3 to be orientated with one of its contact surfaces 3a, 3b facing the first major surface 2a, so that the contact surface 3a, 3b rests on the first major surface 2a at the intended spacer position IP.

As can be seen, the magnet arrangement 100 may in embodiments of the present disclosure comprise a plurality of magnets arranged in a row or the like, so that a plurality of spacers can be dropped at the respective intended position IP substantially simultaneously.

Fig. 7 illustrates a solution according to various embodiments of the present disclosure, wherein a plurality of spacers 3 are stored in a spacer storage 13 with random orientation. The spacers 3 are individually collected, one by one, with a random orientation, from the spacer storage 13 by means of the spacer holder 9.

A relative motion is provided between the spacers in the storage 13 and the holder 9, so that the holder 9 can collect a spacer 3 from the storage 13. The spacer holder 9 comprises a suction inlet 9a for collecting and/or retaining the collected spacer 3.

The spacer holder 9 may in embodiments of the present disclosure comprise a needle, such as a metal needle, 9b having an interior flow path, and the suction inlet to the interior flow path at a distal collection end 9a of the needle. Hence, when the suction inlet at the distal end 9a gets close to or touches a spacer 3 in the storage 13, a spacer 3 is collected by the spacer holder. A suction arrangement (not illustrated) provides a gas flow in the interior flow path of the needle so that the spacer 3 is collected at the distal collection end 9a.

The suction may be provided by means of a suction arrangement such as a suction pump (not illustrated) that provides a suction flow inside the needle's flow path by means of e.g. a suction tube 9c in fluid communication with the needle's flow path.

A monitoring system (not illustrated) may in embodiments of the present disclosure provide a direct or indirect monitoring of the flow in the flow path so as to determine if a spacer has been collected. When it is detected that a spacer 3 has been collected, the spacer holder moves, with the collected spacer 3, to a dropping position DP. At the dropping position DP, a controller controls, such as stops or reduces the flow in the flow path of the spacer holder 9 so that the spacer 3 is released. In some embodiments, the collected spacer may be blown from the holder 9 by means of positive pressure so as to be released from the spacer holder. This may e.g. be provided by providing a flow of blown air into the spacer holder's flow path towards the suction inlet 9a.

In embodiments of the present disclosure, a controller, such as a hardware controller operating according to a program code, controls the spacer holder 9 so as to move, such as reciprocate, the spacer holder 9 between a spacer collection position 12 where a spacer 3 is collected, and a dropping position DP. In other embodiments of the present disclosure (not illustrated), one or more spacer holders may rotate between the collection position 12 and the dropping position DP, e.g. so that a first spacer holder 9 collects a spacer 3 while another other spacer holder is at the dropping position DP to drop a spacer 3, and then the spacer holders switch positions 12, DP.

It is generally understood that the movement of the spacer holder(s) 9 may in embodiments of the present disclosure be provided by means of one or more motors 14, such as one or more electric motors.

A displacement arrangement 15 may in embodiments of the present disclosure comprise one or more guiding rails (as illustrated in fig. 7), a carousel solution, one or more robotic arms and/or the like that are configured to provide and control the movement of the spacer holder(s) 9 between the spacer storage 13 and the dropping position DP. In some embodiments, the displacement arrangement 15 may comprise a robotic pick-and-drop solution comprising/controlling the spacer holder position.

In further embodiments of the present disclosure, as illustrated in e.g. fig. 7, the released spacer 3 may be dropped into a guiding tube 8, such as a funnel.

The guiding tube 8 is arranged between the spacer holder 9 and the intended position IP. The guiding tube 8 then guides the dropped spacer 3 towards the intended position IP, and the dropped spacer 3 (falling at least partly by means of gravity) reaches the outlet 8a of the guiding tube 8 opposite to the intended position IP.

Some of, or substantially the entire, fall of the spacer 3 when dropped may be provided inside the guiding tube 8.

The orientation of the spacer 3 may in some embodiments not be controlled by the guiding tube 8, as the magnet arrangement 100 forces the dropped spacer into having the desired orientation at the intended spacer position IP.

In some embodiments, the orientation of two spacers 3 dropped consecutively into the guiding tube 8 may be allowed to have different/random orientations whole dropping inside the guiding tube.

The spacer 3 may drop substantially freely, such as by gravity, inside the guiding tube 8 while being guided towards the intended position IP by the guiding tube 8 and/or may be dropped freely after leaving the guiding tube outlet 8a.

In other embodiments of the present disclosure, the guiding tube 8, such as funnel, may be omitted, and instead the spacer holder 9 may drop the spacer 3 freely from a dropping position DP substantially above/opposite to the intended spacer position IP.

In embodiments of the present disclosure, the dropped spacer 3 may be dropped from a distance DIS2 of at least 2 cm, such as at least 7 cm, such as at least 10 cm from the first surface 2a and into a guiding tube 8 inlet 8b.

In embodiments of the present disclosure, the dropped spacer 3 may be dropped from a distance DIS2 of between 2 cm and 30 cm, such as between 7 cm and 20 cm from the first surface 2a and into the guiding tube 8 inlet 8b.

Generally, in some embodiments of the present disclosure, the movement of the dropped spacer 3 towards the intended position IP may be provided while a new spacer 3 is retrieved from the storage 13 and put in place for placement/dropping at a new intended location. For example, after the spacer 3 is dropped, for example into the guiding tube 8, the spacer collector may be controlled to provide a relative movement to provide that the spacer collector 9 collects a new, further spacer 3, while the dropped spacer moves to the intended position as is placed as desired at the intended position by means of the magnet arrangement.

Fig. 8 illustrates schematically an embodiment of a spacer 3 according to further embodiments of the present disclosure. This spacer 3 is substantially cylindrically shaped, and comprises a substantially straight side wall 3c extending between the edges 3d. The dimensions (W1, H1) and the material of the spacer 3 may be as previously described.

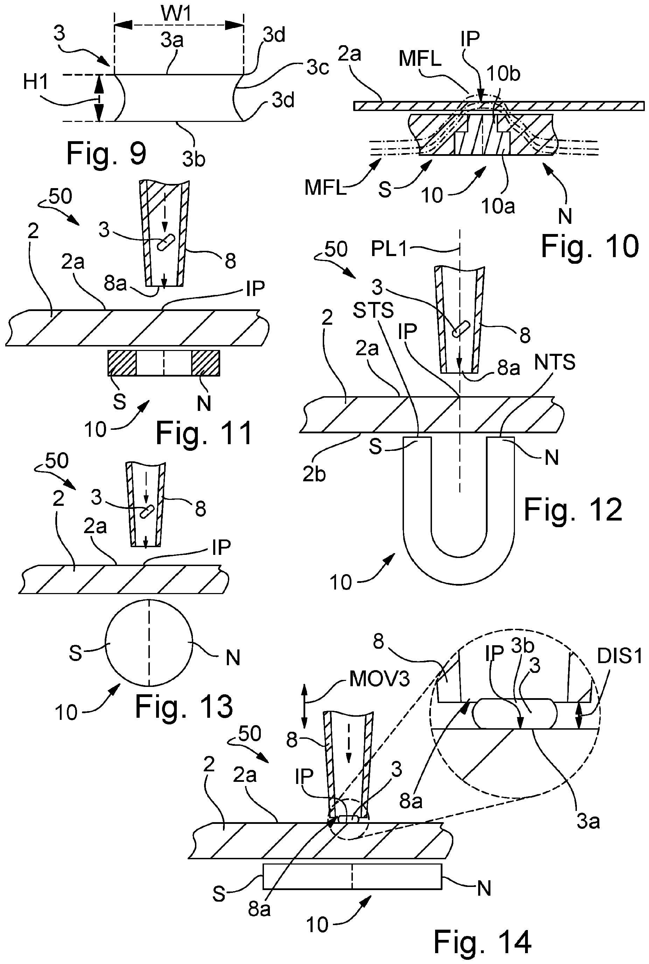

Fig. 9 illustrates schematically an embodiment of a spacer 3 according to further embodiments of the present disclosure. This spacer 3 is shaped with a concave side wall 3c extending between the edges 3d. The dimensions (W1, H1) and the material of the spacer 3 may be as previously described.

Fig. 10 illustrates a magnet 10 according to further embodiments of the present disclosure, that may be used in the magnet arrangement 100. This magnet 10 comprises a non-magnetic block/spacer 10b of material that is placed inside/integrated in the magnet body 10. The non-magnetic block material 10b may help to create a magnetic field "shaping" such that the magnetic field is forced to "bulge" into the glass sheet and towards the intended position IP, so as to provide a desired direction and/or strength of the magnetic field at the intended position IP.

The non-magnetic block/spacer 10b may provide a magnetic discontinuity that separates the poles and generating the flux lines MFL (see figures described previously). The magnet is hence designed so that it comprises a magnetic north pole and a magnetic south pole. The spacer 10b may be a gradient producing spacer placed between the magnetic south pole and the magnetic north pole so as to force a plurality of magnetic flux lines from the north pole out into the glass sheet (and intended position IP) and then back into the south pole.

In some embodiments of the present disclosure, a shield, such as a metal shield, may be used and arranged for shielding and/or redirecting the magnetic field provided by the magnet. In some embodiments, this may comprise redirecting the magnetic field towards the intended position IP with a desired direction of the magnetic field at the intended position. In other embodiments, it may comprise guiding some of the magnetic field away from the intended position, e.g. to reduce the risk of the spacer misplacing away from the intended position due to the magnetic field, or changing orientation away from the desired spacer orientation, at the intended position.

Figs. 11-13 illustrates schematically different embodiments of the present disclosure, where various types of magnets 10 are used for the magnet arrangement 100 as previously described.

In fig. 11, a donut-shaped magnet is used, having a diametrical magnetization. In other embodiments, it may be a diametrical magnetized magnet 10.

In fig. 12, the magnet 10 is a horseshoe magnet. In this embodiment, the magnetic north and south pole terminal NTS, STS surfaces are perpendicular to the plane PL1 and parallel to the glass sheet surface 2b. In other embodiments, one or both of these terminal NTS STS surfaces may be stepped or incline in a direction away from the plane PL1 to e.g. reduce the risk of the dropped spacer moving closer to one of the terminals, away from the intended position IP.

In fig. 13, the magnet 10 is a permanent ball magnet.

Common to the solution in the various embodiments of also figs. 11, 12 and 13 is that the magnet 10 is arranged so that it, due to it's magnetic field, forces the dropped spacer 3 to be orientated with one of the contact surfaces 3a, 3b (see description above relating to embodiments of the spacer 3) facing the first major surface 2a, so that the contact surface 3a, 3b rests on the first major surface 2a at the intended spacer position IP.

Fig. 14 illustrates schematically an embodiment of the present disclosure, wherein the guiding tube 8 outlet 8a is placed with a distance DIS1 to the glass sheet 2 surface 2a.

In fig. 14, the distance DIS1 is lower than the spacer height H1. In this case, the guiding tube 8 may be moved away from the glass sheet surface 2a after the spacer 3 rests on the surface 2a by means of a relative movement MOV3 between the glass sheet surface 2a and the tube 8 outlet 8a end. A displacement mechanism (not illustrated) may displace the glass sheet 2 and/or the guiding tube 8 to obtain this movement MOV3. Afterwards, the guiding tube 8 may be moved towards the glass sheet surface 2a again opposite to another intended position IP for placing another spacer 3 at the same glass sheet surface 2a or a glass sheet surface of another/new glass sheet 2.

In some embodiments (not illustrated), the guiding tube 8 outlet 8a end may be placed to rest at the surface 2a during the dropping of the spacer 3 from the spacer holder 9.

In the above mentioned embodiments, the guiding tube 8 may reduce the risk of spacer misplacement due to dropping the spacer and/or due to magnetic forces induced by the magnet arrangement, since the distance DIS 1 is lower than the spacer height or since the guiding tube 8 outlet 8a end may be placed to rest at the surface 2a.

In other embodiments of the present disclosure, the distance DIS 1 may be larger than the spacer height H1 when the spacer is dropped. This may e.g. provide that a relative movement between the glass sheet surface 2a and the guiding tube outlet 8a to change distance DIS1 between these 8a, 2a between two consecutive spacer droppings by means of the guiding tube 8 may not be needed, or this need may be reduced.

In some embodiments of the present disclosure, the distance DIS1 may b In embodiments of the present disclosure, the distance DIS 1 may be less than 5 mm, such as less than 1 mm, such as less than 0.5 mm from the glass sheet surface 2a and the intended position IP.

In some embodiments of the present disclosure, the distance DIS1 may be more than 0.05 mm, such as more than 0.1 mm, such as more than 0.2 mm.

If the guiding tube 8 is omitted, which it may be in some embodiments of the present disclosure (see e.g. fig. 1), one or more of the above embodiments relating to the distance DIS1 may apply for the distance DIS1 between the part of the spacer holder 9, such as a needle tip, and the intended position IP, when dropping the spacer 3.

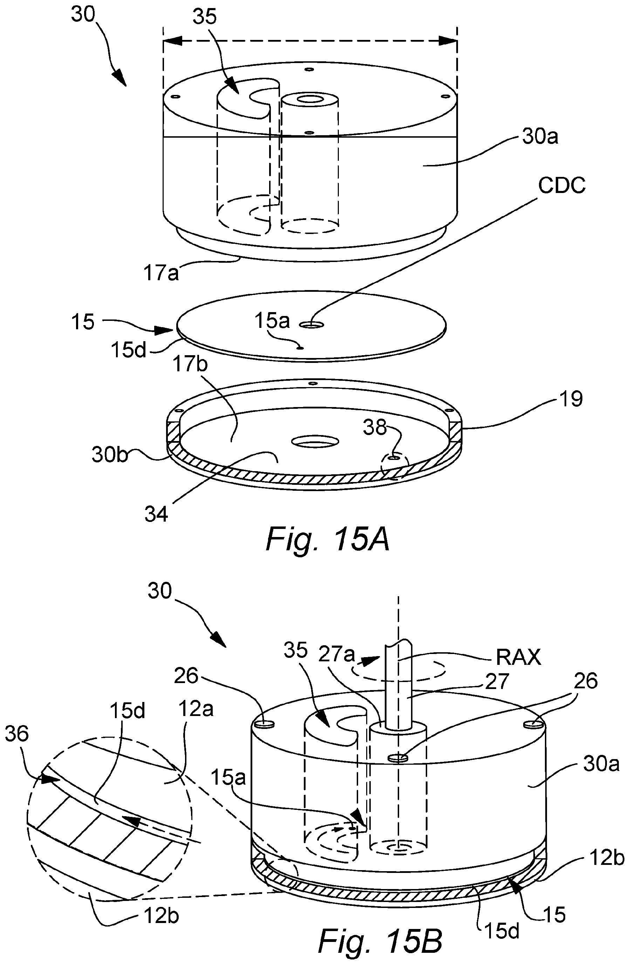

Figs. 15A and 15B illustrates schematically and in perspective a dispenser 30 according to embodiments of the present disclosure, for dispensing spacers 3 onto a glass sheet 2 for use in a vacuum insulating glass unit. Fig. 15A illustrates an exploded, unassembled view of the dispenser 30, so that the different parts of the dispenser according to various embodiments can be seen. Both in fig. 15A and 15B, a bottom part of the dispenser 30 comprises a cut-out in a wall 19 for viewing purpose only, so that the structure of the lower part pf the dispenser 30 is more visible, also after assembling. Hence, it is understood that the wall 19 may in some embodiments be annular and substantially complete, in other embodiments, it may not.

As can be seen, the dispenser 30 comprises an upper part 30a such as a body part, and a bottom part 30b. The upper body part 30a is configured to be attached to the lower body part 30b by mechanical fastening means 26, such as releasable fastening means such as one or more threaded bolts, screws, clips or the like.

The upper body part 30a comprises a spacer storage compartment 35. This storage compartment is configured to store a plurality of spacers 3 therein, such as spacers as previously described.

A guidance space 36 is placed between the upper body part 12a of the housing 12 and the bottom part (12b) of the housing. In the embodiments of figs. 1 and 1a, the guidance space 13 is placed between a first housing surface 17a of the upper body part 30a and a second housing surface 17b of the bottom part 30b. Hence, when the upper body part 30a and the bottom part 30b are assembled, the guidance space 36 is defined/provided. As can be seen, the annular wall 19 of the bottom part 30b may extend around and encircle/enclose the guidance space when the spacer dispenser is assembled.

The dispenser 30 also comprises a disc shaped collection sheet 15. In this embodiment, the collection sheet comprises/describes a circular outer periphery 15d, and comprises a first major surface 15b facing the upper body part 30a and a downwardly facing, oppositely directed, major surface (not visible in fig. 15a and 15b) facing the bottom part 30b. The major surfaces of the collection disc are preferably parallel.

The size, such as the diameter and thickness TH1, of the collection sheet 15 is adapted so that the collection sheet 15 can be rotated around it's centre CDC in the guidance space 36, around a rotation axis RAX. Hence, the major surfaces of the collection sheet 15 comprises/defines a plane that are substantially perpendicular to the rotation axis RAX. The rotation axis RAX is preferably arranged to extend through the collection sheet centre CDC. A shaft 27 extends through the upper body part 30a and may be connected/attached to the upper body part by means of a bearing 27a such as roller bearing or another suitable type of bearing that enables relative rotation between the housing 30a and the shaft 27 around the rotation axis RAX. The rotation axis is in fig. 1a and 1b coincident with a centre axis of the housing, but in other embodiments, the rotation axis may be displaced relative to a centre axis of the housing.

The collection sheet 15a may as illustrated e.g. have hole or the like at the centre CDC, to enable fastening of e.g. a shaft 27 or the like to the collection sheet 15. As can be seen, the bottom wall 34 of the bottom part 30b may in some embodiments be provided with a recess or a hole (the latter being illustrated in fig. 1a) at the centre, so as to e.g. enable space for a fastening part (not illustrated) for fastening the collection sheet 15 to the shaft 27 at the centre CDC.

The outer periphery/boundary of the dispenser 12 is circular and has an outer diameter D2, and the dispenser 12 may as illustrated be e.g. substantially cylindrical.

The dispenser 30 may in embodiments of the present disclosure have a maximum width D2, such as a maximum outer diameter, that is 50 mm or less, such as 40 mm or less, for example 30 mm or less. The dispenser 30 may in embodiments of the present disclosure have a maximum width D2 that is between 20 mm and 70 mm, , such as between 20 mm and 50 mm. such as between 25 mm and 45 mm for example 30 mm.

The width D2 may in an embodiment of the present disclosure be determined/defined along a plane extending in a direction transverse to, such as perpendicular to, the rotation axis RAX1. The maximum width D2 may in an embodiment of the present disclosure be determined/defined in a direction transverse to, such as perpendicular to, the rotation axis RAX1, such as in a direction extending transverse to, such as perpendicular to, the rotation axis RAX1.

The bottom part 30b comprises a spacer outlet 38 for dispensing spacers 3 collected from the storage 35 one at a time towards a glass sheet surface 2a. The spacer outlet 38 is arranged in the major surface 17b facing towards the upper body part 30a and the collection sheet 15.

As can be seen from fig. 15B, the collection sheet 15 is arranged in the guidance space 36 between the surfaces 17a, 17b. The collection sheet 15 comprises a collection hole 15a extending between the opposing major surfaces of the collection sheet 15. The collection hole 15a is a through hole allowing a spacer 3 to enter through the collection hole 16. In fig. 1, the collection sheet comprises a single collection hole 15a. In other embodiments, the collection sheet 15 may comprise a plurality of collection holes 15a, e.g. distributed with a mutual distance of e.g. π (pi), ½ *π* or less around the sheet 15. For example, the collection sheet may comprise 3 collection holes arranged with 120° there between, four collection holes arranged with 90° there between or the like. The collection sheet 15 may comprise between one and ten collection holes15a, such as between one and six collection holes, such as between two and six collection holes (not illustrated). However, it is understood that the collection sheet 15 may also comprise just one collection hole 15a as illustrated.

The collection sheet 15 provides a bottom part of the spacer storage compartment 11, and hence a plurality of the spacers 3 in the storage compartment are configured to be in touch with and support on the major surface 15b of the collection sheet, such as due to gravity. Hence, the size and/or shape of the spacer storage compartment 11 proximate the collection sheet 15 provides that a plurality of spacers are in touch with the surface 15b. Hence, e.g. more than 50, such as more than 200, such as more than 500 spacers may be in touch with the collection sheet surface 15b.

In fig. 15B a relative rotational movement between the collection sheet 15 and the housing 12 is provided by e.g. keeping the housing 12 un-rotating/stationary (with respect to at least rotation). The disc shaped collection sheet 15 is rotated inside the guidance space 13 by means of the shaft 27 and a driver motor such as an electrical motor. In other embodiments of the present disclosure, the relative rotational movement between the collection sheet 15 and the housing parts 30a, 30b may be provided by keeping the collection sheet un-rotating/stationary (with respect to at least rotation) and instead rotate the housing 30a, 30b and hence the spacer outlet 16 by means of a driver motor 18.

The relative rotation around the rotation axis RAX provides that the collection hole 15a enters into the bottom of the spacer storage compartment 35 with the spacers 3 in the storage compartment resting on the surface 15b. Hence, a relative movement between the spacers 2 at the bottom of the compartment 35, which supports on the surface 15b of the collection sheet in the compartment 35, and the collection sheet surface 15b, is provided. Hence, a spacer 2 is collected in the collection hole 15a during the rotational movement when the collection hole 15a "moves through"/swipes the compartment 11 bottom. The collection hole 15a then leaves the spacer storage bottom (with a single collected spacer therein) and enters the guidance space 13 again at a guidance space entrance 13a due to a further rotation around the rotation axis RAX.

The dispenser hence dispenses collected spacers consecutively through the spacer outlet 16, so that the spacer is dropped towards the glass sheet surface 2a (not illustrated in fig. 15A, 15B). The outlet 38 may e.g. be placed with a distance above the intended position.

In some embodiments, the dispenser 30 may be used instead of the previously described spacer holder 9 comprising a needle or the like.

One or more of the housing top part 30a, bottom part 30b and/or the collection sheet 15 may in embodiments of the present disclosure be made from metal such as steel, such as stainless steel, brass or aluminium. In some embodiments, the entire dispenser 30 housing parts 30a, 30b and the collection disc 15 may be made from the same metal material or from different metal materials.

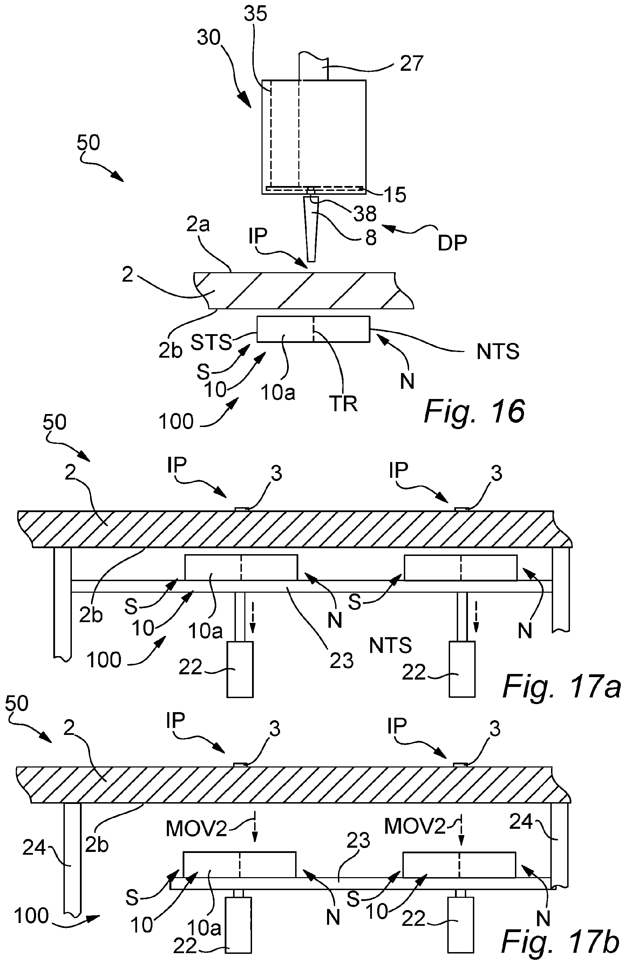

Fig. 16 illustrates schematically an embodiment of the present disclosure, wherein the dispenser (or dispensers of more than one are used) 30 may be arranged to drop the spacer 3 from the spacer outlet 38 and into a guiding tube 8 as previously described (not illustrated in fig 8.

In some embodiments, the guiding tube 8 may be separate to the dispenser 30. In other embodiments, the guiding tube 8 may be attached to the dispenser 30.

The guiding tube 8 helps to locate the dropped spacer 3 so as to lead/guide the spacer to the intended position at/by the magnetic field provided by the magnet arrangement.

The guiding tube 8 may e.g. provide a distancing between the dispenser 30 or spacer holder 9, and the intended spacer position IP. In some embodiments, this may reduce undesired magnetic influencing on the dispenser 30 or spacer holder 9.

In some embodiments, the guiding tube 8 may be made from a non-magnetic material such as a non-magnetic metal or a polymer.

It is generally understood that in embodiments of the present disclosure, the length of the guiding tube 8 may be between 2 cm and 30 cm, such as between 3 cm and 10 cm. The length of the guiding tube 8 extends between the dispenser 30 (or spacer holder solution 9 comprising a needle or the like as previously described) and the glass sheet, and the outlet of the guiding tube 8, such as a funnel, is located opposite the intended position IP at the major surface 2a.

It is understood that in some embodiments, an ionizer device, a grounding solution and/or the like may be used to reduce static electricity during dropping of the spacer.

Figs. 17a and 17b illustrates schematically an embodiment of the present disclosure, wherein a relative movement MOV2 between the magnet arrangement 100 (comprising permanent magnets 10) and the glass sheet 2 is provided in a direction away from the intended position IP where the spacer(s) 3 rest on the surface 2a, after the spacers 3 have been distributed at the intended positions IP. This relative movement MOV2 may be provided in a direction substantially perpendicular to the major surface 2b of the glass sheet 2. The relative movement MOV2 is provided by means of a displacement mechanism 22 such as one or more motors, actuators and/or the like, which is/are controlled by control hardware (not illustrated).

Individual displacement mechanism(s) 22 may in some embodiments be configured to move one or more magnets 10 individually relative to other magnets of the arrangement 100. In fig. 17a-17b, the magnets 10 (e.g. a row or an array of magnets) are interconnected by a magnet support 23, such as a sheet, a grid, or the like, and the magnet support 23 is moved by the displacement mechanism 22 when needed, away from the surface 2b in a direction perpendicular to the surface 2b. This provides that the magnets 10 are moved simultaneously away from the surface 2b.

In other embodiments, (not illustrated) the glass sheet support 24 or other movable parts may be configured so that the glass sheet 2 can be moved upwards, away from the magnet arrangement 10 instead, or both movements may be provided.

The movement MOV2 of the magnets may help to reduce the risk of the spacers 3 misplacing from the intended position IP when moving the glass sheet 2 to a new manufacturing location (e.g. to a pane/glass sheet pairing station or the like), since the magnets 10 are in that case moved away before the glass sheet 2 is removed from a glass sheet support 24 or in other ways transported away from the spacer 3 placement location.

If the magnets 10 of the magnet arrangement 100, instead of being permanent magnets, are electromagnets, these electromagnets may, rather than moving these, be shut off or reduced in strength so that the magnetic field provided by the magnet(s) 10 is reduced or removed when the glass sheet with the spacers 3 at the intended positions is moved for a further VIG unit manufacturing step.

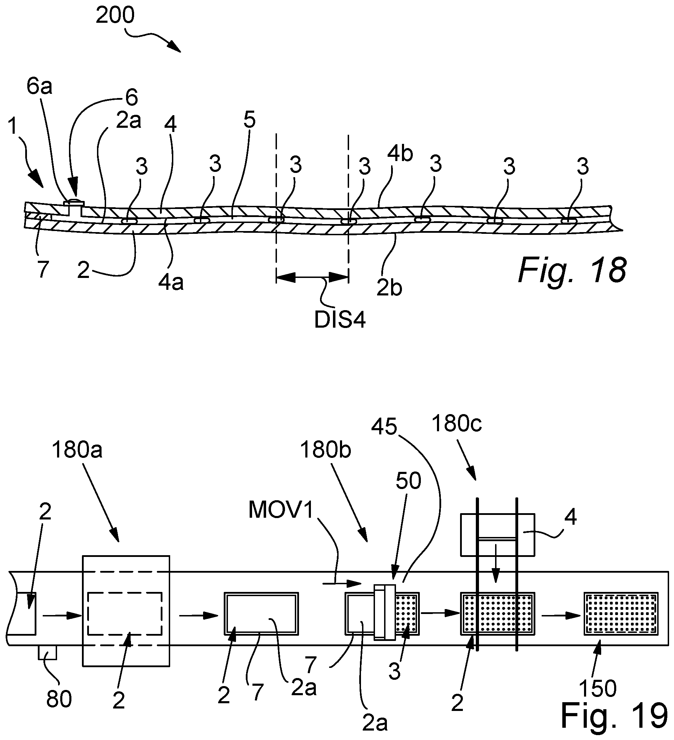

Fig. 18 illustrates schematically a cross section of a vacuum insulated glass (VIG) unit 1 according to embodiments of the present disclosure.

The VIG unit 1 comprises the first glass sheet 2a having the first major surface 3a, and a second glass sheet 4 comprising a second first surface 4a. These first major glass sheet surfaces 3a, 4a faces each other and the evacuated gap 5. The spacers 2 arranged on the surface 2a by means of the solution as previously described are placed in the gap 5. The glass sheets 2, 4 also comprises major surfaces 4b, 2b facing away from the gap.

The glass sheets 2, 4 are sealed together at the periphery of the glass sheets 2, 4 with the plurality of dispensed spacers 3 arranged between the major surfaces 2a, 4a in the gap 5. The sealing together of the first and second glass sheets 2, 4 may comprise use of an edge seal material 7 such as a solder glass edge seal material or a solder metal edge seal, or it may comprise fusing the glass sheets directly together.

In some embodiments, the sealing together may comprise locally heating at least at the edge seal location, or heating the entire VIG unit assembly to a desired temperature in e.g. a furnace, by laser or the like. The sealing together of the glass sheets 2, 4 edges may provide a fused, rigid edge seal. Other airtight edge seal solutions may alternatively be provided.

The glass sheets 2, 4 may be annealed glass sheets or tempered glass sheets, such as thermally tempered glass sheets. One or both glass sheets 2,4 may have a thickness between 1 mm and 6 mm, such as between 1 mm and 4 mm, for example between 2 mm and 3 mm including both end points. The glass sheets 3, 4 may be of the same or different thickness.

The gap 5 has been evacuated to a reduced pressure. In embodiments of the present disclosure, the pressure in the gap 5 may be below 0.05 mbar, such as below 0.005 mbar, such as 0.003 or 0.001 mbar or below. This may be obtained by means of an evacuation pump (not illustrated) prior to sealing the gap 5. For this evacuation of the gap, the pump may have been connected directly or indirectly to an evacuation outlet 6, and after the evacuation, the evacuation outlet 6 is sealed by a sealing 6a, such as at least partly by means of a solder material. In fig. 18, the evacuation outlet 6 is illustrated in a glass sheet, in other embodiments, the evacuation outlet may be provided in the edge seal material or between the edge seal material and one of the glass sheets 3, 4. In some embodiments, the evacuation of the gap 5 may be provided by means of a suction cup arranged to cover an evacuation opening 6. In other embodiments, the evacuation may be provided inside an evacuation chamber, such as where the entire VIG unit assembly is placed inside the evacuation chamber. In some situations, the sealing of the gap and/or fusing at the edges by an edge seal may also be obtained in such a vacuum chamber.

The spacers 3 placed by means of the dispenser(s) 10 maintains a distance between the glass sheet surfaces 3a, 4a at the respective intended position IP across the evacuated gap 5 when the gap has been evacuated. The distance between the glass sheet surfaces 2a, 4a may in embodiments of the present disclosure be 0.5 mm or below, such as 0.3 mm or below, for example 0.2mm or below.

The VIG unit may in some embodiments be laminated (not illustrated) by means of a further glass sheet and a lamination interlayer, such as a PVB or EVA interlayer, placed between the further glass sheet and one of the surfaces 4b, 2b

The VIG unit may e.g. be used for a building window, such as a facade window or a roof window, it may be used for cooling or heating furniture and/or the like.

Fig. 19 illustrates schematically a manufacturing line for a VIG unit according to embodiments of the present disclosure. The first glass sheet 2 first enters a first station 180a where edge seal material 7 such as solder glass edge seal material or metal solder edge seal material is provided to the upwardly facing major surface 2a.

Then the glass sheet 2a is moved to a spacer placement station 180b where spacers 3 are dropped as e.g. previously described, onto the major surface 2a. This is provided so that the spacers 3 are provided with a mutual distance in rows and/or columns at intended positions IP on the glass sheet surface 3a, or in another desired, predefined pattern. The relative movement MOV1 may be provided by means of a motor 80.

At glass pairing station 180c, the glass sheets 4 and 3 are paired by placing the second glass sheet 4 on top of the first glass sheet 3 to cover the spacers 3. The glass sheet 4 may e.g. rest on the edge seal material 7. The glass pairing station may comprise automation systems such as one or more of a robotic arm, one or more linear displacement members, one or more rails and/or the like for transporting the glass sheet 4 to the position opposite the surface 2a and lowering the glass sheet towards the surface 2a.

After this, the edge seal material 7 of the VIG unit assembly 150 may be heated and the gap 5 is evacuated to a reduced pressure. It is understood that the edge seal material 7, if needed, may be placed/applied subsequent to placing the spacers 3 at station 18a instead. It may even in some embodiments be provided in an evacuation chamber or be omitted if the glass sheets are fused directly together by a glass sheet 2, 4 edge melting operation.

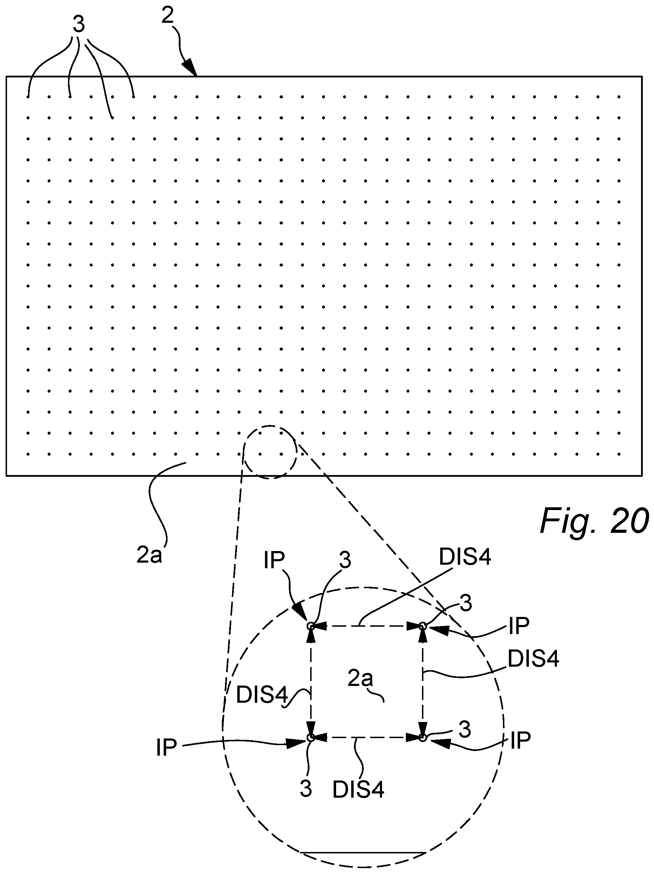

Fig. 20 illustrates a glass sheet 2 having a major glass sheet surface 2a that has been subjected to placement of the spacers 3 at intended positions as described according to various embodiments of the present disclosure above. In this example, the glass sheet 2 has been provided with a full set of spacers 3 compared to the glass sheet surface 2a area. In the example of fig. 20, 18x29 spacers 3 = 522 spacers have been placed to sufficiently cover the glass sheet surface to provide load distribution between the spacers 3 when the gap 5 evacuation is provided.

Generally, in one or more embodiments of the present disclosure, the distance DIS4 between adjacent intended positions IP on the glass sheet surface 2a may be between 20 mm and 70 mm, such as between 25 mm and 45 mm, such as between 35 mm and 45 mm. This may apply for more than 50% or more than 60%, such as more than 90% of the intended positions IP.

Generally, the distance DIS4, such as the maximum distance, such as the maximum shortest distance, between more than 60%, such as more than 90% or more than 95% of all the adjacent intended positions IP on the glass sheet surface 2a may in one or more embodiments of the present disclosure be between 20 mm and 70 mm, such as between 25 mm and 60 mm, such as between 25 mm and 45 mm. This may apply for distances between intended positions in rows and/or columns or the like.

It is generally understood that the magnets of the magnet arrangement 100 (not illustrated in fig. 20) may be arranged according to a predefined template to enable the spacers 3 being arranged at the intended positions with the intended mutual distances and the intended spacer orientation.

Generally, in some embodiments of the present disclosure, the system may be designed so that 400 spacers 3 are placed at intended positions IP at a glass sheet 2 surface 2a within no more than 40 seconds, such as no more than 30 seconds, e.g. no more than 20 seconds. This may be provided by dropping the spacers towards the intended surface IP, in combination with e.g. using a plurality, such as a row, or more than one row, of spacer holders 9, 30, and guiding tubes 8 as e.g. previously described. In one or more embodiments the method is able to correctly place and orient more than 10 spacers / second such as 20 spacers / second.

### Items

Various embodiments of the present disclosure are described in the below items.
1. Method of manufacturing a vacuum insulated glass unit (200), the method comprising:
   - providing a first glass sheet (2) comprising a first major surface (2a) and a second, oppositely directed major surface (2b),
   - distributing a plurality of spacers (3) onto the first major surface (2a), wherein the spacers (3) comprises a ferromagnetic material,
   - arranging a second glass sheet (4) so that the distributed spacers (3) are placed in a gap (5) between the first major surface (2a) and a major surface the second glass sheet (4),
   - providing an edge seal (7) for sealing the gap (5), and
   - evacuating and sealing the gap (5),

   wherein the distribution of the plurality of spacers (3) comprises dropping spacers (3) from a spacer holder (9, 30) from a distance above the first major surface (2a) and towards an intended spacer position (IP),
   wherein each, dropped spacer (3) comprises predefined, oppositely directed contact surfaces (3a, 3b), and wherein the spacer (3) has a maximum spacer width (W1), wherein the maximum spacer width (W1) is at least 1.1 times, such as at least 1.3 times, larger than the maximum spacer height (H1), wherein the maximum spacer height (H1) extends between the oppositely directed contact surfaces (3a, 3b),
   wherein a magnet arrangement (100) is arranged opposite to the second major surface (2b), wherein the magnet arrangement (100) comprises one or more magnets (10), wherein the magnet arrangement (100) forces the dropped spacer (3) to be orientated with one of said contact surfaces (3a, 3b) facing the first major surface (2a), so that the contact surface (3a, 3b) rests on the first major surface (2a) at the intended spacer position (IP).
2. A method according to item 1, wherein the maximum spacer height (H1) of the dropped spacer (3) is between 0.1 mm and 0.3 mm, such as between 0.15 mm and 0.25 mm, such as between 0.18 mm and 0.22 mm.
3. A method according to any of the preceding items, wherein the intended spacer position (IP) is located opposite to a location (LOC), where said location (LOC) is arranged between a first north pole (N) and a first south pole (S) arranged adjacent to the first north pole (N) of the magnet arrangement (100), wherein said location (LOC) is arranged opposite to the second major surface (2c).
4. A method according to item 3, wherein the location (LOC) is arranged substantially midway between the north pole (N) and a south pole (S) of the magnet arrangement (100).
5. A method according to item 3 or 4, wherein the location (LOC) is arranged between the north pole (N) and the south pole (S) of a magnet (10) of the magnet arrangement.
6. A method according to any of the preceding items, wherein the intended spacer position (IP) is located between an exit point (EXP) where a magnetic field line (MFL1) provided by the magnet arrangement (100) exits the first glass sheet (2) through the first major surface (2a) and an entrance point (ENP) where the imaginary, magnetic field line enters into the first glass sheet (2) again through the first major surface (2a).
7. A method according to any of the preceding items, wherein the strength of the magnetic field provided by the magnet arrangement (100) is weaker at the intended spacer position (IP) than the strength of the magnetic field at positions at the first major surface (2a) that are arranged nearer, such as opposite to, the north pole (N) and south pole (S) terminals that are nearest the intended spacer position (IP), when the spacer is dropped towards the intended spacer position (IP).
8. A method according to any of the preceding items, wherein the direction (Tan) of the magnetic field (MFL) extending opposite to the first major surface (2a) is substantially parallel to the first major surface (2a) substantially opposite to the intended spacer position (IP).
9. A method according to any of the preceding items, wherein a magnet body (10a) of a magnet (10) of the magnet arrangement (100) is arranged opposite to the intended spacer position (IP).
10. A method according to any of the preceding items, wherein the intended spacer position is arranged opposite to the transition (TR) between the north part (Np) and south part (Sp) of the magnet body (10a).
11. A method according to any of the preceding items, wherein the magnet arrangement (100) is configured so that a direct line (NSL) extending between a first magnetic south (S) terminal (STS) and a first magnetic north (N) terminal (NTS) extends with an angle that is less than 45°, such as less than 10°, such as less than 5° to the second major surface (2b), such as wherein said direct line (NSL) is parallel to the second major surface (2b).
12. A method according to item 11, wherein said direct line (NSL) extends through the magnet body, such as extends through the magnet body in substantially the entire extension of the direct line (NSL).
13. A method according to any of the preceding items, wherein the maximum spacer width (W1) of the dropped spacer is at least 0.3 mm, such as at least 0.4 mm, such as at least 0.5 mm, and/or wherein the maximum spacer width (W1) of the dropped spacer is between 0.15 mm and 0.7 mm, such as between 0.3 mm and 0.6 mm, such as between 0.35 mm and 0.55 mm.
14. A method according to any of the preceding items, wherein the dropped spacer (3) comprises a side surface (3c) extending between edges (3d) of the spacer (3), wherein said edges (3d) of the spacer (3) borders the first (3a) and second (3b) contact surfaces, respectively.
15. A method according to item 14, wherein the side surface (3c), extends convexly, such as curved, between said edges (3d).
16. A method according to any of the preceding items, wherein the dropped spacer is dropped freely, such as from an outlet (8a, 38) and/or a spacer holder (9a, 30) and towards the first major surface (2a).
17. A method according to any of the preceding items, wherein the dropped spacer is dropped from a guiding tube outlet (8a) and/or spacer holder (9a, 30) and towards the intended spacer position (IP), wherein the guiding tube outlet (8a) and/or the spacer holder (9a) is placed with a distance (DIS1) from the intended spacer position (IP) that is less than the maximum spacer height (H1).
18. A method according to any of the preceding items, wherein the dropped spacer is dropped from a guiding tube outlet (8a) and/or spacer holder (9a, 30) and towards the intended spacer position, wherein the guiding tube outlet (8a) and/or the spacer holder (9a, 30) is placed with a distance from the intended spacer position (IP) that is larger than the maximum spacer height (H1).
19. A method according to any of the preceding items, wherein the dropped spacer (3) is dropped from a distance (DIS2) of at least 2 cm, such as at least 7 cm, such as at least 10 cm from the first surface (2a) and into a guiding tube (8).
20. A method according to any of the preceding items, wherein a guiding tube (8), such as a funnel, is arranged between the spacer holder (9, 30) and the intended spacer position (IP), and wherein the spacer holder (9, 30), at a dropping position (DP), releases the spacer (3) into the guiding tube (8).
21. A method according to any of the preceding items, wherein a controller controls the spacer holder (9) so as to move, such as reciprocate and/or rotate, the spacer holder (9) between a spacer collection position (12) where a spacer (3) is individually collected from a storage (13), and a dropping position (DP).
22. A method according to any of the preceding items, wherein the spacer holder (9) comprises a suction inlet (9a) for collecting and/or retaining the collected spacer (3).
23. A method according to any of the preceding items, wherein the spacer holder (9) comprises a needle (9b) having an interior flow path and wherein the suction inlet to the interior flow path is arranged at a distal collection end of the needle (9b), wherein a suction arrangement provides a gas flow in the interior flow path of the needle so that the spacer (3) is collected at the distal collection end (9a).
24. A method according to any of the preceding items, wherein a plurality of spacers (3) are stored in a spacer storage (13, 35) with a random orientation, and wherein the spacers (3) are individually collected, one by one, from the spacer storage (13, 35).
25. A method according to any of the preceding items, wherein the magnet arrangement (100) comprises one or more permanent magnets (10).
26. A method according to any of the preceding items, wherein the magnet arrangement (100) comprises one or more electro magnets.
27. A method according to any of the preceding items, wherein the magnet arrangement (100) comprises one or more rod magnet(s) (10), horse shoe magnet(s), ball magnet(s) and/or disc magnet(s).
28. A method according to any of the preceding items, wherein the north pole (N) terminal surface (NTS) and the south pole (S) terminal surface (STS) of the respective magnet (10) of the magnet arrangement (100) extends in a direction different from parallel to the second major surface (2b).
29. A method according to any of the preceding items, wherein the north pole (N) terminal surface (NTS) and the south pole (S) terminal surface (STS) of the respective magnet (10) of the magnet arrangement (100) are arranged to face away from a plane (PL1) extending through said intended spacer position, which plane (PL1) extends perpendicular to the first major surface (2a).
30. A method according to any of the preceding items, wherein the north pole (N) terminal surface (NTS) and the south pole (S) terminal surface (STS) of the respective magnet (10) of the magnet arrangement (100) are arranged to be substantially parallel with a plane (PL1) extending through said intended spacer position (IP), which plane (PL1) extends substantially perpendicular to the first major surface (2a).
31. A method according to any of the preceding items, wherein a relative movement (MOV2) between the magnet arrangement (100) and the glass sheet (2a) is provided after the spacer (3) has been arranged to rest at the intended spacer position (IP), wherein said relative movement (MOV2) is provided in a direction away from the second major surface (2b) of the glass sheet (2) so as to increase a distance (DIS1) between the intended spacer position (IP) and one or more magnets (1) of the magnet arrangement (100).
32. A method according to item 30, wherein the relative movement (MOV2) is a movement (MOV2) that is perpendicular to the second major surface (2b).
33. A method according to any of the preceding items, wherein the spacer holder comprises a spacer (3) dispenser (30) comprising a housing (30a, 30b), a spacer storage (35) and a movable part (15, 30a, 30b) configured to individually collect and/or individually dispense the spacer (3) from the spacer storage (35) and through an outlet (38) of the dispenser (30).
34. A method according to item 33, wherein the dispenser (30), such as the movable part, comprises a collection sheet (15) which individually collects a spacer (3) from the spacer storage (35) of the dispenser.
35. A method according to any of the preceding items, wherein the magnet arrangement (100) comprises a plurality of magnets (10)
36. A method according to claim 35, wherein the plurality of magnets (10) orientate different spacers (3) at different intended positions (IP).
37. A method according to item 35 or 36, wherein the position-to-magnet distance between the intended position (IP) at the first major surface (2a) and the magnet (10) providing the magnetic filed for that intended position (IP) may be at least five times lower, such as at least nine times lower, than the position-to-magnet distance between that intended position (IP) and a neighbouring magnet (10) of the magnet arrangement (100) arranged opposite another neighbouring intended position (IP) for another spacer (3).
38. A method according to any of the preceding items, wherein the distance (DIS4) between adjacent intended positions (IP) is between 20 mm and 70 mm, such as between 25 mm and 60 mm, such as between 25 mm and 45 mm.
39. A method according to any of the preceding items, wherein the length (ML) of the magnet (10) body (10a), is larger than the maximum spacer width (W1), such as at least 10 times, such as at least 15 times or at least 20 times, larger than the maximum spacer width (W1).
40. A spacer placement system (50) comprising at least one spacer holder (9, 30) and a magnet arrangement (100), wherein the spacer placement system (50) is configured to place spacers (3) at intended spacer positions (IP) according to any of the preceding items.

In general, it is to be understood that the present disclosure is not limited to the particular examples described above but may be adapted in a multitude of varieties within the scope of the present disclosure as specified in e.g. the items and/or the claims. Accordingly, for example, one or more of the described and/or illustrated embodiments above may be combined to provide further embodiments of the present disclosure.

## Claims

1. Method of manufacturing a vacuum insulated glass unit (200), the method comprising:
- providing a first glass sheet (2) comprising a first major surface (2a) and a second, oppositely directed major surface (2b),
- distributing a plurality of spacers (3) onto the first major surface (2a), wherein the spacers (3) comprises a ferromagnetic material,
- arranging a second glass sheet (4) so that the distributed spacers (3) are placed in a gap (5) between the first major surface (2a) and a major surface (4a) of the second glass sheet (4),
- providing an edge seal (7) for sealing the gap (5), and
- evacuating and sealing the gap (5),
wherein the distribution of the plurality of spacers (3) comprises dropping spacers (3) from a spacer holder (9, 30) from a distance above the first major surface (2a) and towards an intended spacer position (IP),
wherein each, dropped spacer (3) comprises predefined, oppositely directed contact surfaces (3a, 3b), and wherein the spacer (3) has a maximum spacer width (W1), wherein the maximum spacer width (W1) is at least 1.1 times, such as at least 1.3 times, larger than the maximum spacer height (H1), wherein the maximum spacer height (H1) extends between the oppositely directed contact surfaces (3a, 3b),
wherein a magnet arrangement (100) is arranged opposite to the second major surface (2b), wherein the magnet arrangement (100) comprises one or more magnets (10), wherein the magnet arrangement (100) forces the dropped spacer (3) to be orientated with one of said contact surfaces (3a, 3b) facing the first major surface (2a), so that the contact surface (3a, 3b) rests on the first major surface (2a) at the intended spacer position (IP).

2. A method according to claim 1, wherein the maximum spacer height (H1) of the dropped spacer (3) is between 0.1 mm and 0.3 mm, such as between 0.15 mm and 0.25 mm, such as between 0.18 mm and 0.22 mm.

3. A method according to any of the preceding claims, wherein the intended spacer position (IP) is located opposite to a location (LOC), where said location (LOC) is arranged between a first north pole (N) and a first south pole (S) arranged adjacent to the first north pole (N) of the magnet arrangement (100), wherein said location (LOC) is arranged opposite to the second major surface (2c).

4. A method according to any of the preceding claims, wherein the direction (Tan) of the magnetic field (MFL) extending opposite to the first major surface (2a) is substantially parallel to the first major surface (2a) substantially opposite to the intended spacer position (IP).

5. A method according to any of the preceding claims, wherein a magnet body (10a) of a magnet (10) of the magnet arrangement (100) is arranged opposite to the intended spacer position (IP).

6. A method according to any of the preceding claims, wherein the intended spacer position (IP) is arranged opposite to the transition (TR) between the north part (Np) and south part (Sp) of the magnet body (10a).

7. A method according to any of the preceding claims, wherein the dropped spacer (3) is dropped freely, such as from an outlet (8a, 38) and/or a spacer holder (9a, 30), and towards the first major surface (2a).

8. A method according to any of the preceding claims, wherein the dropped spacer is dropped from a guiding tube outlet (8a) and/or spacer holder (9a, 30) and towards the intended spacer position (IP), wherein the guiding tube outlet (8a) and/or the spacer holder (9a) is placed with a distance (DIS1) from the intended spacer position (IP) that is less than the maximum spacer height (H1).

9. A method according to any of the preceding claims, wherein a guiding tube (8), such as a funnel, is arranged between the spacer holder (9, 30) and the intended spacer position (IP), and wherein the spacer holder (9, 30), at a dropping position (DP), releases the spacer (3) into the guiding tube (8).

10. A method according to any of the preceding claims, wherein the dropped spacer (3) is dropped from a distance (DIS2) of at least 2 cm, such as at least 7 cm, such as at least 10 cm from the first surface (2a) and into a guiding tube (8).

11. A method according to any of the preceding claims, wherein the magnet arrangement (100) comprises one or more permanent magnets (10).

12. A method according to any of the preceding claims, wherein the north pole (N) terminal surface (NTS) and the south pole (S) terminal surface (STS) of the respective magnet (10) of the magnet arrangement (100) extends in a direction different from parallel to the second major surface (2b).

13. A method according to any of the preceding claims, wherein the north pole (N) terminal surface (NTS) and the south pole (S) terminal surface (STS) of the respective magnet (10) of the magnet arrangement (100) are arranged to face away from a plane (PL1) extending through said intended spacer position (IP), which plane (PL1) extends perpendicular to the first major surface (2a),
such as
wherein the north pole (N) terminal surface (NTS) and the south pole (S) terminal surface (STS) of the respective magnet (10) of the magnet arrangement (100) are arranged to be substantially parallel with said plane (PL1).

14. A method according to any of the preceding claims, wherein the length (ML) of the magnet (10) body (10a), is larger than the maximum spacer width (W1), such as at least 10 times, such as at least 15 times or at least 20 times, larger than the maximum spacer width (W1).

15. A method according to any of the preceding claims, wherein a relative movement (MOV2) between the magnet arrangement (100) and the glass sheet (2a) is provided after the spacer (3) has been arranged to rest at the intended spacer position (IP), wherein said relative movement (MOV2) is provided so as to increase a distance (DIS1) between the intended spacer position (IP) and one or more magnets (1) of the magnet arrangement (100), such as wherein said relative movement (MOV2) is substantially perpendicular to the major surfaces (2a, 2b) of the first glass sheet (2).
